# EUROPEAN PATENT APPLICATION

(11) **EP 4 590 021 A1**
(43) Date of publication of application: **23.07.2025**
(21) Application number: 22958863.7
(22) Date of filing: 16.09.2022
(51) Int. Cl.: H04W 28/16, H04W 24/02

(54) **VERIFICATION OF RAPP INDICATION IN SMO**

(71) Applicant: Rakuten Mobile, Inc., Tokyo 158-0094 (JP)
(72) Inventor: SHETE Pankaj, Tokyo 158-0094 (JP); MUHAMMAD Awn, Tokyo 158-0094 (JP)
(74) Representative: Betten & Resch
(86) International application number: PCT/JP2022/034814
(87) International publication number: WO 2024/057544

(57) **Abstract**

A radio access network control apparatus includes at least one processor that performs: by an instruction verification unit provided in the SMO (Service Management and Orchestration) of the O-RAN, verifying instruction to the outside of the SMO generated by the rApp executed by the Non-RT RIC (Non-Real Time RAN Intelligent Controller) in the SMO; and by an instruction issuance unit provided in the SMO, issuing the verified instruction to the outside of the SMO. The instruction verification unit verifies an operational policy generated by the rApp concerning the operation of a radio access network node, and the instruction issuance unit issues the verified operational policy to at least one of the radio access network node, a virtual infrastructure that virtually manages the radio access network node, and the Near-RT RIC (Near-Real Time RAN Intelligent Controller).

## Description

### BACKGROUND OF THE INVENTION

### 1. Field of the Invention

The present disclosure relates to verification of rApp instruction in SMO of O-RAN.

### 2. Description of the Related Art

For the purpose of the so-called open radio access network (RAN) in a mobile communication system, "Open RAN", "O-RAN", "vRAN" and the like are being considered. In this specification, "O-RAN" is used as a comprehensive term for such various "open radio access networks". Therefore, the interpretation of "O-RAN" in this specification is not limited to the standard and/or the specification of the same name "O-RAN" specified by the O-RAN Alliance. In an O-RAN, a virtual infrastructure also referred to as O-Cloud that virtually manages a set of a plurality of radio access network nodes (RAN nodes) is provided.

A controller of the O-RAN includes a Non-RT RIC (Non-Real Time RAN Intelligent Controller) and a Near-RT RIC (Near-Real Time RAN Intelligent Controller). The Non-RT RIC, which has a relatively long control cycle (e.g., 1 second or longer), executes application software called rApp. The Near-RT RIC, which has a relatively short control cycle (e.g., shorter than 1 second), executes application software called xApp. Besides, in the O-RAN, a virtual infrastructure also referred to as O-Cloud (hereinafter referred to as O-Cloud for convenience) that virtually manages a set of a plurality of radio access network nodes (RAN nodes) is provided.

Patent Literature 1: JP-A-2021-83058

### SUMMARY OF THE INVENTION

The Non-RT RIC is provided in the SMO (Service Management and Orchestration) and generates various instructions to the RAN nodes, the O-Cloud, the Near-RT RIC and the like outside the SMO, through the execution of the rApp. These instructions are issued to the outside of the SMO through various interfaces such as the O1 interface, the O2 interface, and the A1 interface. In the conventional SMO, instructions generated by the rApp are issued to the outside of the SMO with almost no changes, regardless of the target (the RAN node, the O-Cloud, the Near-RT RIC and the like) or the interface (the O1 interface, the O2 interface, the A1 interface and the like). Therefore, there is a risk that rApp executing different tasks or jobs may issue contradicting instructions to the outside of the SMO, wasting resources of the SMO itself or outside the SMO for their execution, resolution, coordination and the like.

The present disclosure was made in view of these circumstances, and its purpose is to provide a radio access network control apparatus and the like that can efficiently issue instruction generated by the rApp to the outside of the SMO.

In order to solve the above issue, a radio access network control apparatus in a certain aspect of the present disclosure includes at least one processor that performs: by an instruction verification unit provided in the SMO (Service Management and Orchestration) of the O-RAN, verifying instruction to the outside of the SMO generated by the rApp executed by the Non-RT RIC (Non-Real Time RAN Intelligent Controller) in the SMO; and by an instruction issuance unit provided in the SMO, issuing the verified instruction to the outside of the SMO.

According to this aspect, before the instruction issuance unit provided in the SMO issues instruction of the rApp to the outside of the SMO, the instruction verification unit provided in the SMO verifies the instruction. As such, among instructions generated by the rApp, the instruction that has been verified by the instruction verification unit is efficiently issued to the outside of the SMO by the instruction issuance unit.

Another aspect of the present disclosure is a radio access network control method. The method includes: in the SMO (Service Management and Orchestration) of the O-RAN, verifying instruction to the outside of the SMO generated by the rApp executed by the Non-RT RIC (Non-Real Time RAN Intelligent Controller) in the SMO; and in the SMO, issuing the verified instruction to the outside of the SMO.

Further another aspect of the present disclosure is a computer-readable medium. The computer-readable medium stores a radio access network control program causing a computer to perform: in the SMO (Service Management and Orchestration) of the O-RAN, verifying instruction to the outside of the SMO generated by the rApp executed by the Non-RT RIC (Non-Real Time RAN Intelligent Controller) in the SMO; and in the SMO, issuing the verified instruction to the outside of the SMO.

In addition, any combination of the above components, and any conversion of the expression of the present disclosure among methods, devices, systems, recording media, computer programs and the like are also encompassed within this disclosure.

According to the present disclosure, instruction generated by the rApp can be efficiently issued to the outside of the SMO.

### BRIEF DESCRIPTION OF THE DRAWINGS

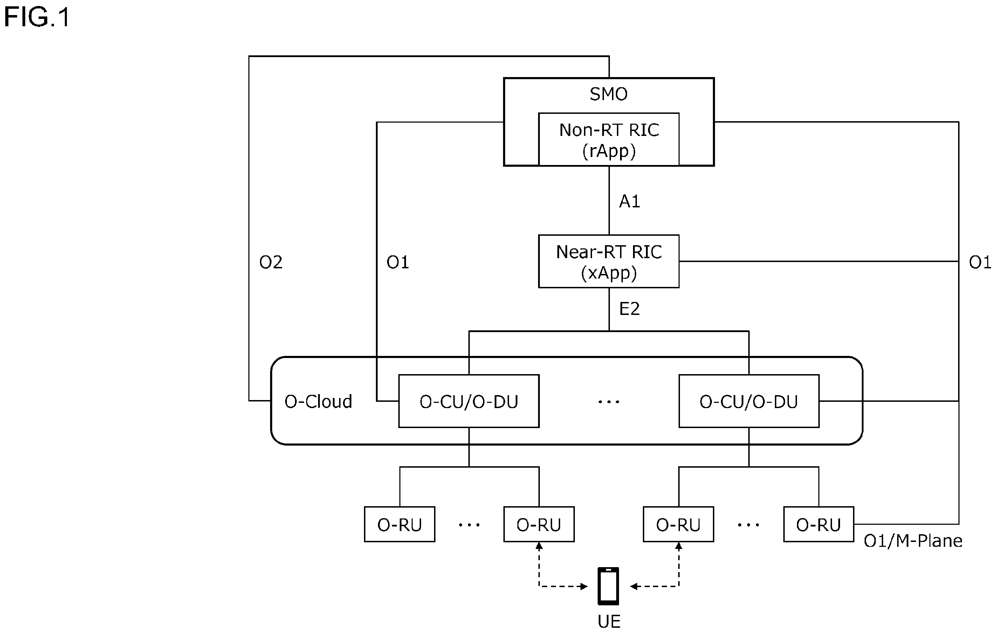

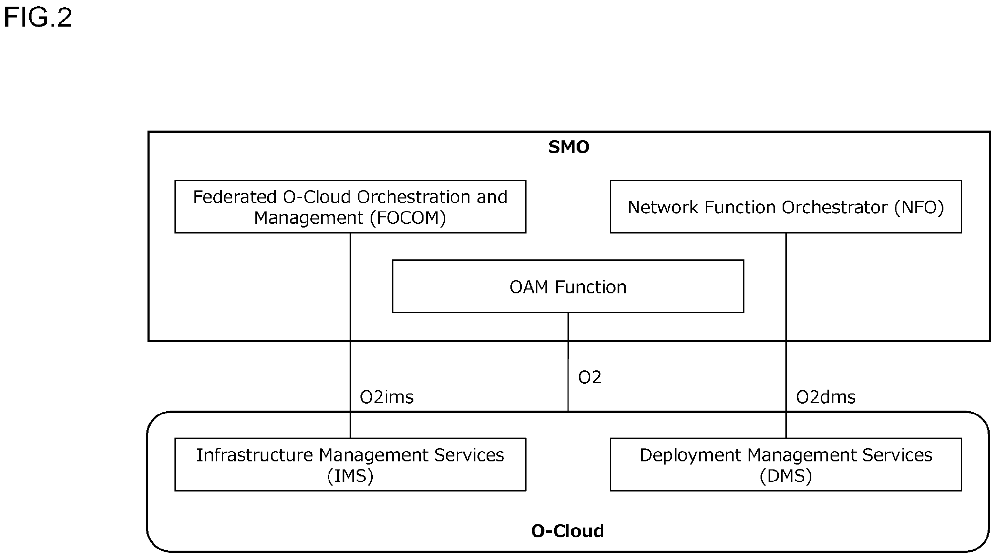

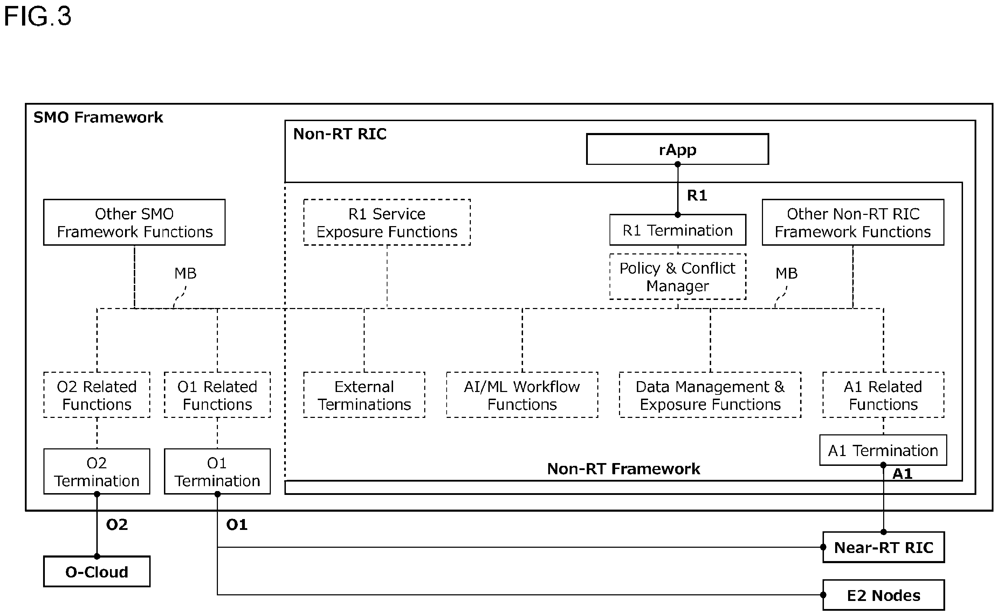

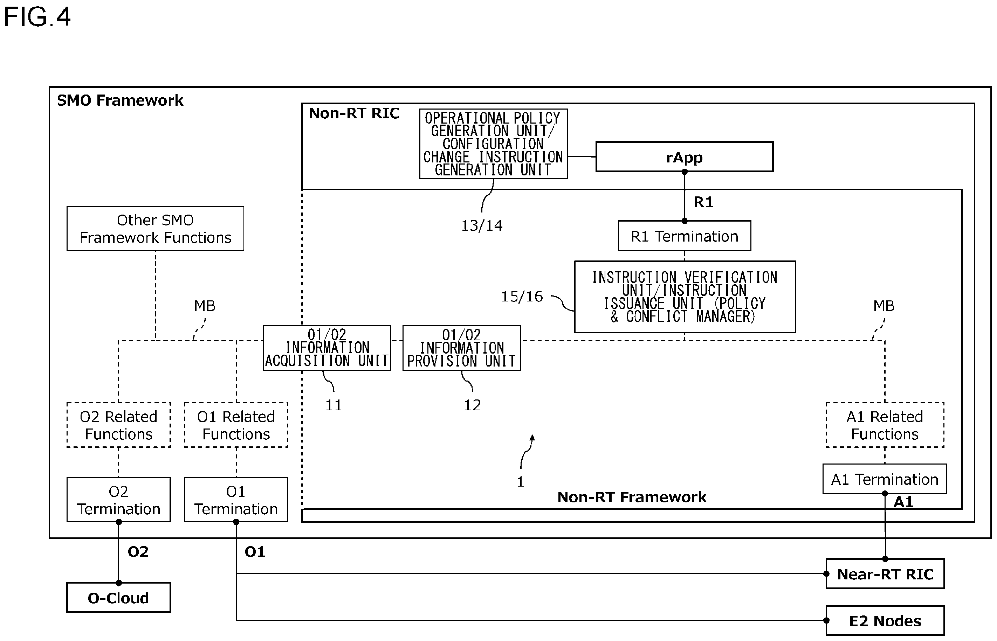

Figure 1 is a schematic overview of a radio access network control apparatus. Figure 2 schematically shows various functions realized in the SMO and/or the Non-RT RIC and O-Cloud. Figure 3 is a schematic representation of structures and/or functions inside the SMO and/or the Non-RT RIC. Figure 4 is a functional block diagram schematically showing a radio access network control apparatus.

### DETAILED DESCRIPTION OF THE INVENTION

In the following, the present embodiment is described in accordance with the "O-RAN" which is the standard or the specification developed by the O-RAN Alliance. Therefore, the known terms defined in "O-RAN" will be used in the present embodiment just for convenience, but the technologies according to this disclosure can be applied to other existing radio access networks such as "Open RAN" and "vRAN" or to similar radio access networks that may be developed in the future.

Figure 1 shows a schematic overview of the radio access network control apparatus according to the present embodiment. This radio access network control apparatus is a RAN control apparatus that controls radio access network in accordance with the O-RAN. The SMO (Service Management and Orchestration) controls the entire RAN control apparatus or the entire O-RAN and coordinates the operations of each portion. The SMO is equipped with a Non-RT RIC (Non-Real Time RAN Intelligent Controller) that functions as the overall control processor responsible for overall control. The Non-RT RIC, which has a relatively long control cycle (e.g., 1 second or longer), issues: a guideline, a policy, or a guidance concerning the operation of each RAN node (O-CU and/or O-DU as described below); and a configuration change instruction concerning the configuration change outside the SMO such as each of the RAN nodes, the O-Cloud, the Near-RT RIC (Near-Real Time RAN Intelligent Controller) and the like. Specifically, the Non-RT RIC executes application software called rApp to issue: the operational policy for each RAN node to the Near-RT RIC through the A1 interface; and the configuration change instruction outside the SMO through the O1 interface, the O2 interface and the like. The Near-RT RIC, which has a relatively short control cycle (e.g., shorter than 1 second), executes application software called xApp to control each RAN node (O-CU/O-DU) itself and/or general-purpose hardware and the like in the radio unit (O-RU) connected to each of the RAN nodes through the E2 interface.

The illustrated RAN node has an O-CU, which is an O-RAN compliant central unit (CU), and/or O-DU, which is an O-RAN compliant distributed unit (DU). Both of the O-CU and the O-DU are responsible for baseband processing in the O-RAN, where the O-CU is provided on the side of the core network (not shown in the figure), and the O-DU is provided on the side of the O-RU, which is an O-RAN compliant radio unit (RU). The O-CU may be divided into the O-CU-CP, which constitutes the control plane (CP), and the O-CU-UP, which constitutes the user plane (UP). The O-CU and the O-DU may be integrally configured as a single baseband processing unit. The O-eNB as a base station compliant with the O-RAN and the 4th generation mobile communication system (4G), may be provided as a RAN node. One or more O-RUs are connected to each RAN node (O-CU/O-DU) and are controlled by the Near-RT RIC via each of the RAN nodes. A communication device (UE: User Equipment) in the communication cell provided by each O-RU can be connected to each of the O-RUs, and can perform mobile communication with the core network (not shown) via each RAN node (O-CU/O-DU).

Each RAN node (O-CU/O-DU) and the Near-RT RIC provide operational data and the like of each RAN node, each O-RU and each UE through the O1 interface to the SMO for so-called FCAPS (Fault, Configuration, Accounting, Performance, Security). Based on the operational data acquired through the O1 interface, the SMO updates as necessary: the operational policy for each RAN node issued by the Non-RT RIC to the Near-RT RIC through the A1 interface; and the configuration change instruction outside the SMO issued by the Non-RT RIC through the O1 interface, the O2 interface and the like. The O-RUs may be connected to the SMO for the FCAPS by the O1 interface or other interfaces (e.g., Open Fronthaul M-Plane).

The O-Cloud as a virtual infrastructure that virtually manages a set of the plurality of RAN nodes (O-CUs/O-DUs) is connected to the SMO by an O2 interface. The SMO generates a resource allocation policy concerning the resource allocation and/or a workload management policy concerning the workload management of the plurality of RAN nodes, based on the operational states of the plurality of RAN nodes (O-CUs/O-DUs) acquired from the O-Cloud through the O2 interface, and issues them to the O-Cloud through the O2 interface.

Figure 2 schematically shows the various functions realized in the SMO and/or the Non-RT RIC and the O-Cloud. In the SMO, three main functions are realized, which are the FOCOM (Federated O-Cloud Orchestration and Management), the NFO (Network Function Orchestrator) and the OAM Function. In the O-Cloud, two main functions are realized, which are the IMS (Infrastructure Management Services) and the DMS (Deployment Management Services).

The FOCOM manages resources in the O-Cloud, while receiving services from the IMS of the O-Cloud through the O2 interface (O2ims). The NFO realizes the orchestrated operation of a set of network functions (NFs) by a plurality of NF Deployments in the O-Cloud, while receiving services from the DMS of the O-Cloud through the O2 interface (O2dms). The NFO may utilize the OAM Function to access the deployed NFs through the O1 interface. The OAM Function is responsible for the FCAPS management of O-RAN managed entities such as the RAN nodes. The OAM Function in the present embodiment can be a functional block where callbacks are provided for receiving data concerning failures and/or operational states of the plurality of RAN nodes that are virtually managed by the O-Cloud, by monitoring processes or procedures over the O2ims and/or the O2dms. The IMS is responsible for managing the O-Cloud resources (hardware) and/or the software used for managing them, and provides services primarily to the FOCOM of the SMO. One or more DMSs are responsible for the management of the plurality of NF Deployments in the O-Cloud, specifically the initiation, monitoring, termination and the like, and provides services primarily to the NFO of the SMO.

Figure 3 is a schematic representation of structures and/or functions inside the SMO and/or the Non-RT RIC. The SMO or the SMO framework includes the Non-RT RIC. Inside the Non-RT RIC is divided into the Non-RT framework or the Non-RT RIC framework and the rApp. The solid lines in this figure represent functional blocks and/or connections defined in the O-RAN. The dotted lines in this figure represent functional blocks and/or connections that can be implemented in the O-RAN.

In the SMO framework excluding the Non-RT RIC, the O1 Termination, the O1 Related Functions, the O2 Termination, the O2 Related Functions, and the Other SMO Framework Functions are provided. The O1 Termination is the termination of the O1 interface in the SMO framework. As also shown in Figure 1, the O1 Termination is connected to the Near-RT RIC and/or the E2 nodes (RAN nodes such as O-CUs/O-DUs, O-RU and the like) via the O1 interface. The O1 Related Functions directly connected the O1 Termination provide various functions related to the O1 interface, the Near-RT RIC, the E2 node and the like The O2 Termination is the termination of the O2 interface in the SMO framework. As also shown in Figure 1, the O2 Termination is connected to the O-Cloud via the O2 interface. The O2 Related Functions directly connected the O2 Termination provide various functions related to the O2 interface, the O-Cloud and the like The Other SMO Framework Functions provide other functions except for the O1 Related Functions and the O2 Related Functions. The Other SMO Framework Functions are connected to the A2 Termination (not shown) in the Non-RT RIC via the A2 interface (not shown). Various functions of the SMO framework such as the O1 Related Functions, the O2 Related Functions, and the Other SMO Framework Functions, are connected to the main bus MB extending also inside the Non-RT RIC. Each of these functional blocks can exchange data with other functional blocks inside and outside the SMO framework (or inside and outside the Non-RT RIC) through the main bus MB.

In the Non-RT framework, which is the area of the Non-RT RIC excluding the rApp, the A1 Termination, the A1 Related Functions, the A2 Termination (not shown), the A2 Related Functions (not shown), the R1 Termination, the R1 Service Exposure Functions, the External Terminations, the Data Management & Exposure Functions, the AI (Artificial Intelligence)/ML (Machine Learning) Workflow Functions, the Policy/Conflict Management Functions (Policy & Conflict Manager), and the Other Non-RT RIC Framework Functions are provided.

The A1 Termination is the termination of the A1 interface in the Non-RT framework. As also shown in Figure 1, the A1 Termination is connected to the Near-RT RIC via the A1 interface. The A1 Related Functions directly connected the A1 Termination provide various functions related to the A1 interface, the Near-RT RIC and the like The A2 Termination (not shown) is the termination of the A2 interface (not shown) in the Non-RT framework. The A2 Termination is connected to the Other SMO Framework Functions of the SMO framework via the A2 interface. The A2 Related Functions (not shown) directly connected the A2 Termination provide various functions related to the A2 interface, the Other SMO Framework Functions and the like

The R1 Termination is the termination of the R1 interface in the Non-RT framework. The R1 Termination is connected to the rApp running on the Non-RT RIC via the R1 interface. In other words, the R1 interface constitutes the API (Application Programming Interface) for the rApp. The R1 Service Exposure Functions accompanying the R1 Termination provide the function of disclosing data related to services such as the R1 interface and the rApp to the main bus MB and the like and/or provide the function of disclosing data from the main bus MB and the like to the R1 Termination and the like for services such as the R1 interface and the rApp. The External Terminations are terminations of various external interfaces (not shown) in the Non-RT framework.

The Data Management & Exposure Functions manage various data on the main bus MB, and provide the function of disclosing them in a manner in accordance with the access right of each functional block. The AI/ML Workflow Functions provide the function of managing workflows executed using the artificial intelligence (AI) capability and/or the machine learning (ML) capability implemented in the Non-RT RIC and/or the Near-RT RIC. The Policy/Conflict Management Functions constitute the instruction verification unit that verifies instructions (operational policies and/or configuration change instructions) generated by the rApp to the outside of the SMO, as described below.

The Other Non-RT RIC Framework Functions provide other functions except for the above various Non-RT framework functions. Various functions of the Non-RT framework such as the A1 Related Functions, the A2 Related Functions, the R1 Termination, the R1 Service Exposure Functions, the External Terminations, the Data Management & Exposure Functions, the AI/ML Workflow Functions, the Policy/Conflict Management Functions, and the Other Non-RT RIC Framework Functions, are connected to the main bus MB extending also outside the Non-RT RIC. Each of these functional blocks can exchange data with other functional blocks inside and outside the Non-RT RIC through the main bus MB.

Figure 4 is a functional block diagram schematically showing the radio access network control apparatus 1 according to the present embodiment. The radio access network control apparatus 1 is provided in the SMO framework and/or the Non-RT framework in Figure 3. In this figure, some functional blocks in Figure 3 (specifically, the R1 Service Exposure Functions, the External Terminations, the Data Management & Exposure Functions, the AI/ML Workflow Functions, and the Other Non-RT RIC Framework Functions) are omitted.

The radio access network control apparatus 1 includes an O1/O2 information acquisition unit 11, an O1/O2 information provision unit 12, an operational policy generation unit 13, a configuration change instruction generation unit 14, an instruction verification unit 15, an instruction issuance unit 16. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across plurality of computers. Especially in the present embodiment, some or all of the functional blocks of the radio access network control apparatus 1 may be realized in a processor provided in the SMO and/or the Non-RT RIC, or may be realized in a computer and/or a processor provided outside the SMO and/or the Non-RT RIC in a distributed manner or a centralized manner.

An O1 information acquisition unit included in the O1/O2 information acquisition unit 11 acquires O1 information concerning at least one of the Near-RT RIC and the E2 node (RAN node) from the O1 interface. Specifically, the O1 information acquisition unit is provided in the SMO and/or the Non-RT RIC and acquires the O1 information from the Near-RT RIC and/or the E2 node through the O1 interface. Examples of the O1 information include various control information representing the control state of the Near-RT RIC and/or individually measured operational data for each E2 node. The operational data of each E2 node can be various data detectable in a base station of normal mobile communication. Examples of the operational data include: the communication volume per time period and/or the communication speed; the number and/or the type of connected UEs (communication devices); the strength and/or the mode of communication signal from UE; the quality of the channel between UE and O-RU; the coverage and/or the available bandwidth of the communication cell provided by O-RU; and the capability and/or the state and the like of the hardware of E2 node and/or O-RU. Thus, the O1 information acquisition unit constitutes an operational data acquisition unit that acquires measured operational data from RAN nodes.

The O1 information acquisition unit in Figure 4 is shown schematically on the main bus MB, spanning inside and outside the Non-RT framework. However, the O1 information acquisition unit can be provided in whole or in part within the SMO framework outside the Non-RT framework. Besides, as long as the O1 information acquisition unit can access the relevant functional blocks within the SMO, specifically the O1 Termination, the O1 Related Functions, the O1/O2 information provision unit 12 (especially an O1 information provision unit), the Policy/Conflict Management Functions (especially the instruction verification unit 15), the R1 Termination, the rApp (the operational policy generation unit 13 and/or the configuration change instruction generation unit 14) and the like, it does not have to be directly connected to the main bus MB. Among these relevant functional blocks, the O1 Related Functions inside the SMO framework (outside the Non-RT framework) is the most relevant, where some or all of the functions of the O1 information acquisition unit are preferably realized.

An O2 information acquisition unit included in the O1/O2 information acquisition unit 11 constitutes virtual infrastructure information acquisition unit that acquires O2 information as virtual infrastructure information concerning the O-Cloud from the O2 interface. Specifically, the O2 information acquisition unit is provided in the SMO and/or the Non-RT RIC and acquires the O2 information from the O-Cloud through the O2 interface. Examples of the O2 information include information concerning configuration and/or telemetry of the O-Cloud and/or failure and/or operational state of each E2 node (each RAN node) that is virtually managed by the O-Cloud. Examples of the operational state of each E2 node include resource usage status and communication load status in each E2 node. These O2 information may be acquired, for example, from the IMS in the O-Cloud through the O2ims interface by the FOCOM in the SMO, and/or from the O-Cloud through the O2 interface by the OAM Function in the SMO. Thus, the O2 information acquisition unit constitutes an operational state acquisition unit that acquires the operational states of the RAN nodes from the O-Cloud that virtually manages the RAN nodes.

The O2 information acquisition unit in Figure 4 is shown schematically on the main bus MB, spanning inside and outside the Non-RT framework. However, the O2 information acquisition unit can be provided in whole or in part within the SMO framework outside the Non-RT framework. Besides, as long as the O2 information acquisition unit can access the relevant functional blocks within the SMO, specifically the O2 Termination, the O2 Related Functions, the O1/O2 information provision unit 12 (especially an O2 information provision unit), the Policy/Conflict Management Functions (especially the instruction verification unit 15), the R1 Termination, the rApp (the operational policy generation unit 13 and/or the configuration change instruction generation unit 14) and the like, it does not have to be directly connected to the main bus MB. Among these relevant functional blocks, the O2 Related Functions inside the SMO framework (outside the Non-RT framework) is the most relevant, where some or all of the functions of the O2 information acquisition unit are preferably realized.

The O1/O2 information provision unit 12 provides the O1 information and/or the O2 information acquired by the O1/O2 information acquisition unit 11 to the rApp through the R1 interface in the Non-RT RIC. An O2 information provision unit included in the O1/O2 information provision unit 12 constitutes a virtual infrastructure information provision unit that provides the virtual infrastructure information (the O2 information) to the rApp through the R1 interface, which is the interface with the rApp. The O1/O2 information provision unit 12 in Figure 4 is shown schematically on the main bus MB inside the Non-RT framework. However, the O1/O2 information provision unit 12 can be provided in whole or in part within the Non-RT framework. Besides, as long as the O1/O2 information provision unit 12 can access the relevant functional blocks within the SMO, specifically the O1/O2 information acquisition unit 11, the Policy/Conflict Management Functions (especially the instruction verification unit 15), the R1 Termination, the R1 Service Exposure Functions (not shown), the rApp (the operational policy generation unit 13 and/or the configuration change instruction generation unit 14) and the like, it does not have to be directly connected to the main bus MB. Among these relevant functional blocks, the R1 Service Exposure Functions (not shown) inside the Non-RT framework is the most relevant, where some or all of the functions of the O1/O2 information provision unit 12 are preferably realized.

The operational policy generation unit 13 realized by the rApp generates operational policy concerning the operation of each of the RAN nodes, based on the operational state and the operational data and the like of each RAN node, which are acquired by the O1/O2 information acquisition unit 11 and provided by the O1/O2 information provision unit 12. Among the operational policies generated by the operational policy generation unit 13, those issued to the O-Cloud through the O2 interface by the instruction issuance unit 16 described below are exemplified as resource allocation policy and/or workload management policy concerning resource allocation and/or workload management of a plurality of RAN nodes. Besides, among the operational policies generated by the operational policy generation unit 13, those issued to the Near-RT RIC or each RAN node through the A1 interface or the O1 interface by the instruction issuance unit 16 described below are exemplified as traffic control policy concerning traffic control of each of the RAN nodes.

The Near-RT RIC that has received the operational policy and/or the traffic control policy through the A1 interface, controls each RAN node through the E2 interface (Figure 1) based on each of the policies. For example, if the traffic control policy is to reduce the traffic at a specific RAN node, the Near-RT RIC performs a traffic restriction process to such RAN node itself and/or UEs in the communication cell provided by O-RU connected to such RAN node. Examples of the traffic restriction process include: directing UEs connected to the specific RAN node to other available RAN nodes; restricting the communication speed and/or the communication volume of UEs connected to the specific RAN node; and restricting the connection of new UEs to the specific RAN node.

The operational policy generation unit 13 may generate the operational policies including the resource allocation policy, the workload management policy and the traffic control policy, utilizing a machine learning model provided by the AI (Artificial Intelligence)/ML (Machine Learning) Workflow Functions (not shown). The machine learning model is capable of deriving a set of the operational policies, from a set of the failures and/or the operational states of the plurality of RAN nodes acquired through the O2 interface from the O-Cloud by the O2 information acquisition unit (the O1/O2 information acquisition unit 11) constituting the operational state acquisition unit, and the individual operational data of each RAN node acquired through the O1 interface and the like by the O1 information acquisition unit (the O1/O2 information acquisition unit 11) constituting the operational data acquisition unit. Specifically, the machine learning model to which a set of the operational state from the O2 information acquisition unit (the operational state acquisition unit) and the operational data from the O1 information acquisition unit (the operational data acquisition unit) have been input, outputs a set of the operational policies such as the resource allocation policy and/or the workload management policy issued to the O-Cloud through the O2 interface and the traffic control policy issued to each of the RAN nodes through the A1 interface or the O1 interface, based on machine learning conducted in advance using comprehensive training data or teacher data that relate the input and the output.

In such a manner, the machine learning model of the present embodiment relates a set of the input from the O-Cloud (operational state) and the input from each RAN node (operational data), to a set of the output to the O-Cloud (the resource allocation policy, the workload management policy and the like) and the output to each RAN node (the traffic control policy and the like). Compared with the simple case where the input from the O-Cloud is individually mapped to the output to the O-Cloud, and the input from each RAN node is individually mapped to the output to each RAN node, the machine learning model of the present embodiment allows holistic or comprehensive considerations of the correlation and the like between the inputs and the outputs of the O-Cloud and each RAN node. Therefore, it is possible to effectively administer the operational policy for the efficient operation of each RAN node, from both the O-Cloud and each RAN node.

The configuration change instruction generation unit 14 realized by the rApp generates configuration change instructions concerning configuration changes outside the SMO, based on various O1 information and/or O2 information (including the aforementioned operational state and operational data of each RAN node) acquired by the O1/O2 information acquisition unit 11 and provided by the O1/O2 information provision unit 12. The configuration change instructions generated by the configuration change instruction generation unit 14 are instructions to change at least a portion of the software and/or the hardware of the components outside the SMO in the O-RAN, e.g., the O-RU, the RAN node, the O-Cloud, and the Near-RT RIC.

The configuration change instructions concerning hardware of the O-RU or the RAN node may include instructions to perform (or stop) so-called hardware acceleration. Hardware acceleration is a technology to support a general-purpose processor such as a CPU (Central Processing Unit) by means of hardware equipped with circuits that are specialized or customized for specific processes and/or applications. Examples of those special-purpose hardware include FPGA (Field-Programmable Gate Array), GPU (Graphics Processing Unit), ASIC (Application Specific Integrated Circuit), DSP (Digital Signal Processor) and the like. Even complex processes that require a lot of time or power in software processing by a general-purpose processor can be executed at high speed and efficiency by a specialized processor with hardware implementation.

The configuration change instruction generation unit 14 may generate the configuration change instructions, utilizing a machine learning model provided by the AI/ML Workflow Functions (not shown). The machine learning model is capable of deriving a set of the configuration change instructions, from a set of various O1 information and/or O2 information acquired through the O1 interface and/or the O2 interface by the O1/O2 information acquisition unit 11. Specifically, the machine learning model to which a set of various O1 information and O2 information from the O1/O2 information acquisition unit 11 have been input, outputs a set of the configuration change instructions issued to outside of the SMO through the O1 interface, the O2 interface, the A1 interface and the like, based on machine learning conducted in advance using comprehensive training data or teacher data that relate the input and the output. The machine learning model relates a set of the input from the outside of the SMO (O1 information and O2 information), to a set of the output to the outside of the SMO (the configuration change instruction).

As described above, the Non-RT RIC provided in the SMO generates various instructions (especially operational policies and configuration change instructions) to the RAN nodes, the O-Cloud, the Near-RT RIC and the like outside the SMO through the execution of the rApp. These instructions are issued to the outside of the SMO through various interfaces such as the O1 interface, the O2 interface, and the A1 interface. In the conventional SMO, instructions generated by the rApp are issued to the outside of the SMO with almost no changes, regardless of the target (the RAN node, the O-Cloud, the Near-RT RIC and the like) or the interface (the O1 interface, the O2 interface, the A1 interface and the like). Therefore, there is a risk that rApp executing different tasks or jobs may issue contradicting instructions to the outside of the SMO, wasting resources of the SMO itself or outside the SMO for their execution, resolution, coordination and the like. According to the present embodiment of the radio access network control apparatus 1 (especially the instruction verification unit 15 and the instruction issuance unit 16) described below, instructions generated by the rApp can be efficiently issued to the outside of the SMO.

The instruction verification unit 15 provided in the SMO verifies instructions to the outside of the SMO generated by the rApp executed by the Non-RT RIC in the SMO. Specifically, the instruction verification unit 15 verifies the operational policies concerning the operations of the RAN nodes generated by the operational policy generation unit 13 in the rApp, together with the configuration change instructions concerning the configuration changes outside the SMO generated by the configuration change instruction generation unit 14 in the rApp. For example, the instruction verification unit 15 applies at least one of the following processes to each instruction (each operational policy and each configuration change instruction) generated by the rApp: prioritization, issuance scheduling, cancellation, and modification. The prioritization process assigns priority to a plurality of instructions generated by the rApp. The issuance scheduling process specifies the issuance timing by the instruction issuance unit 16 for each instruction generated by the rApp. The cancellation process cancels instructions generated by the rApp which contradict or conflict with other instructions or which may deteriorate the performance or the efficiency of the O-RAN. The modification process makes various changes to instructions generated by the rApp which would be subject to the cancellation process if left as they are. It should be noted that, instead of the instruction verification unit 15, the rApp may apply the modification process to the instructions identified by the instruction verification unit 15 as subject to the cancellation process.

The instruction verification unit 15 is provided at any location within the SMO so that it can access the instructions (operational policies and configuration change instructions) generated by the rApp. However, for efficient access to virtually all instructions generated by the rApp, it is preferred that at least a portion of the instruction verification unit 15 be provided in the Non-RT RIC, and it is even more preferred that it be attached to the R1 interface, which is the interface with the rApp. For example, it is preferred that at least a portion of the instruction verification unit 15 be provided in the R1 Termination, which is the termination of the R1 interface that constitutes the API of the rApp, or the accompanying R1 Service Exposure Functions (not shown).

The instruction issuance unit 16 provided in the SMO issues the instructions of the rApp verified by the instruction verification unit 15 to the outside of the SMO. Specifically, the instruction issuance unit 16 issues to the outside of the SMO, the operational policies concerning the operations of the RAN nodes generated by the operational policy generation unit 13 in the rApp, and the configuration change instructions concerning the configuration changes outside the SMO generated by the configuration change instruction generation unit 14 in the rApp, which have been verified by the instruction verification unit 15.

The instruction issuance unit 16 issues operational policies verified by the instruction verification unit 15 to at least one of the RAN node, the O-Cloud that virtually manages the RAN node, and the Near-RT RIC. Specifically, the instruction issuance unit 16 issues the operational policies verified by the instruction verification unit 15 to the Near-RT RIC through the A1 interface, issues the operational policies verified by the instruction verification unit 15 to the O-Cloud through the O2 interface, and issues the operational policies verified by the instruction verification unit 15 to the RAN node or the O-RU through the O1 interface or the Open Fronthaul M-Plane. Besides, the instruction issuance unit 16 issues the configuration change instructions verified by the instruction verification unit 15 to at least one of the RAN node, the O-Cloud that virtually manages the RAN node, and the Near-RT RIC. Specifically, the instruction issuance unit 16 issues the configuration change instructions verified by the instruction verification unit 15 to the O-Cloud through the O2 interface, and issues the configuration change instructions verified by the instruction verification unit 15 to the RAN node, the O-RU, the Near-RT RIC and the like through the O1 interface, the Open Fronthaul M-Plane, the A1 interface and the like.

The instruction issuance unit 16 issues instructions that have been prioritized by the instruction verification unit 15, to the outside of the SMO according to the assigned priority. Therefore, important instructions with high priority, urgency, frequency, impact and the like are issued to the outside of the SMO with priority (note that instructions with high frequency or impact may conversely be given a lower priority because they require careful verification). Besides, the instruction issuance unit 16, for instructions that have undergone the issuance scheduling process by the instruction verification unit 15, issues the instructions to the outside of the SMO according to the specified schedule and/or issuance timing. In this way, the performance or efficiency of the O-RAN can be improved by appropriately determining the order or timing of issuance of the rApp instructions according to the situation in the O-RAN (especially outside the SMO).

It should be noted that the instruction issuance unit 16 does not issue instructions to the outside of the SMO that have been cancelled by the instruction verification unit 15. Besides, the instruction issuance unit 16 issues instructions that have been modified by the instruction verification unit 15 and/or the rApp to the outside of the SMO according to the priority or schedule of the modified instructions. This effectively prevents instructions generated by the rApp that are inconsistent or conflicting with other instructions, or that may deteriorate the performance or the efficiency of the O-RAN, from being issued to the outside of the SMO as is.

The instruction issuance unit 16 is provided at any location within the SMO so that it can access the instruction verification unit 15, where the verification results of the rApp instructions are acquired, and the A1 interface, the O1 interface, and the O2 interface, where instructions are issued to the outside of the SMO. However, for rapid issuance of instructions to the outside of the SMO, it is preferred that at least a portion of the instruction issuance unit 16 be attached to at least one of the A1 interface, the O1 interface, or the O2 interface, which are interfaces with the outside of the SMO. For example, it is preferred that the functions of the instruction issuance unit 16 related to issuing the operational policies and the like through the A1 interface be provided in the A1 Termination, which is the termination of the A1 interface, or in the accompanying A1 Related Functions, that the functions of the instruction issuance unit 16 related to issuing the configuration change instructions and the like through the O1 interface be provided in the O1 Termination, which is the termination of the O1 interface, or in the accompanying O1 Related Functions, and that the functions of the instruction issuance unit 16 related to issuing the configuration change instructions and the like through the O2 interface be provided in the O2 Termination, which is the termination of the O2 interface, or in the accompanying O2 Related Functions.

As described above, the instruction issuance unit 16 issues various instructions (operational policies, configuration change instructions and the like) generated by the rApp through various interfaces (the A1 interface, the O1 interface, the O2 interface and the like) to various components outside the SMO (the O-RU, the RAN node, the O-Cloud, the Near-RT RIC and the like). Therefore, it is efficient to distribute and implement the relevant functions of the instruction issuance unit 16 to each corresponding interface, where each instruction is issued to the outside of the SMO. Similarly, by distributing and implementing the relevant functions of the instruction verification unit 15 to each interface (the A1 interface, the O1 interface, the O2 interface and the like), the Policy/Conflict Management Functions composed by the instruction verification unit 15 and the instruction issuance unit 16 can be optimized for each interface where each instruction is issued to the outside of the SMO.

For example, for the A1 interface, which is mainly responsible for issuing operational policies to the Near-RT RIC, the function of the instruction verification unit 15 to verify the operational policies for the Near-RT RIC generated by the operational policy generation unit 13 is provided in the A1 Termination or the A1 Related Functions, and the function of the instruction issuance unit 16 to issue the verified operational policies to the Near-RT RIC through the A1 interface is provided in the A1 Termination or the A1 Related Functions. Similarly, for the O1 interface, which is mainly responsible for issuing configuration change instructions to the RAN node, the function of the instruction verification unit 15 to verify the configuration change instructions for the RAN node generated by the configuration change instruction generation unit 14 is provided in the O1 Termination or the O1 Related Functions, and the function of the instruction issuance unit 16 to issue the verified configuration change instructions to the RAN node through the O1 interface is provided in the O1 Termination or the O1 Related Functions. Besides, for the O2 interface, which is mainly responsible for issuing configuration change instructions to the O-Cloud, the function of the instruction verification unit 15 to verify the configuration change instructions for the O-Cloud generated by the configuration change instruction generation unit 14 is provided in the O2 Termination or the O2 Related Functions, and the function of the instruction issuance unit 16 to issue the verified configuration change instructions to the O-Cloud through the O2 interface is provided in the O2 Termination or the O2 Related Functions.

It should be noted that, similar to the operational policy generation unit 13 and/or the configuration change instruction generation unit 14, the instruction verification unit 15 and/or the instruction issuance unit 16 above may utilize a machine learning model provided by the AI/ML Workflow Functions (Figure 3) in the SMO to verify and/or issue the rApp instructions. Besides, if the Near-RT RIC is also provided with the similar function to the AI/ML Workflow Functions, some of the functions of the instruction verification unit 15 and/or the instruction issuance unit 16 may be provided in the Near-RT RIC, so that the more efficient verification and/or issuance of the rApp instructions is possible based on the available information (e.g., actions initiated by the Near-RT RIC for each RAN node) and the machine learning model. Alternatively, by providing or aggregating the various data generated by the machine learning model in the Near-RT RIC to the instruction verification unit 15 and/or the instruction issuance unit 16 in the SMO through the O1 interface or the A1 interface, the verification and/or issuance of the rApp instructions can be performed centrally in the SMO.

According to the above embodiment, before the instruction issuance unit 16 provided in the SMO issues the rApp instructions to the outside of the SMO, the instruction verification unit 15 provided in the SMO centrally verifies the instructions. Therefore, instructions generated by the rApp that have been verified by the instruction verification unit 15 are efficiently issued to the outside of the SMO by the instruction issuance unit 16.

The present disclosure has been described above based on embodiments. It is obvious to those skilled in the art that various variations are possible in the combination of each component and/or each process in the exemplary embodiments, and that such variations are also encompassed within the scope of the present disclosure.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A radio access network control apparatus comprising at least one processor that performs:
   by an instruction verification unit provided in the SMO (Service Management and Orchestration) of the O-RAN,
   verifying instruction to the outside of the SMO generated by the rApp executed by the Non-RT RIC (Non-Real Time RAN Intelligent Controller) in the SMO; and
   by an instruction issuance unit provided in the SMO, issuing the verified instruction to the outside of the SMO.
2. The radio access network control apparatus according to item 1, wherein
   the instruction verification unit verifies an operational policy generated by the rApp concerning the operation of a radio access network node, and
   the instruction issuance unit issues the verified operational policy to at least one of the radio access network node, a virtual infrastructure that virtually manages the radio access network node, and the Near-RT RIC (Near-Real Time RAN Intelligent Controller).
3. The radio access network control apparatus according to item 1 or 2, wherein
   the instruction verification unit verifies a configuration change instruction generated by the rApp concerning the configuration change outside the SMO, and
   the instruction issuance unit issues the verified configuration change instruction to at least one of a radio access network node, a virtual infrastructure that virtually manages the radio access network node, and the Near-RT RIC (Near-Real Time RAN Intelligent Controller).
4. The radio access network control apparatus according to item 2, wherein
   the instruction verification unit verifies, together with the operational policy, a configuration change instruction generated by the rApp concerning the configuration change outside the SMO, and
   the instruction issuance unit issues at least one of the verified operational policy and the verified configuration change instruction to at least one of the radio access network node, the virtual infrastructure, and the Near-RT RIC.
5. The radio access network control apparatus according to any of items 1 to 4, wherein the instruction verification unit applies at least one of the following processes to the instruction generated by the rApp: prioritization, issuance scheduling, cancellation, and modification.
6. The radio access network control apparatus according to any of items 1 to 5, wherein at least a portion of the instruction verification unit is provided in the Non-RT RIC.
7. The radio access network control apparatus according to item 6, wherein at least a portion of the instruction verification unit is provided to the R1 interface, which is the interface with the rApp.
8. The radio access network control apparatus according to any of items 1 to 7, wherein at least a portion of the instruction issuance unit is provided to at least one of the A1 interface, the O1 interface, and the O2 interface, which are the interfaces with the outside of the SMO.
9. The radio access network control apparatus according to any of items 1 to 8, wherein
   the at least one processor performs:
   by a virtual infrastructure information acquisition unit, acquiring virtual infrastructure information from a virtual infrastructure that virtually manages a radio access network node; and
   by a virtual infrastructure information provision unit, providing the virtual infrastructure information to the rApp through the R1 interface, which is the interface with the rApp; and wherein
   the instruction verification unit verifies the instruction generated by the rApp based on the virtual infrastructure information.
10. The radio access network control apparatus according to any of items 1 to 9, wherein
   the at least one processor performs:
   by an operational state acquisition unit, acquiring operational state of a radio access network node from a virtual infrastructure that virtually manages the radio access network node;
   by an operational data acquisition unit, acquiring measured operational data from the radio access network node; and
   by the rApp-based operational policy generation unit, generating an operational policy concerning the operation of the radio access network node based on the operational state and the operational data; and wherein
   the instruction verification unit verifies the operational policy.
11. A radio access network control method comprising:
   in the SMO (Service Management and Orchestration) of the O-RAN, verifying instruction to the outside of the SMO generated by the rApp executed by the Non-RT RIC (Non-Real Time RAN Intelligent Controller) in the SMO; and
   in the SMO, issuing the verified instruction to the outside of the SMO.
12. A computer-readable medium storing a radio access network control program causing a computer to perform:
   in the SMO (Service Management and Orchestration) of the O-RAN, verifying instruction to the outside of the SMO generated by the rApp executed by the Non-RT RIC (Non-Real Time RAN Intelligent Controller) in the SMO; and
   in the SMO, issuing the verified instruction to the outside of the SMO.

The present disclosure relates to verification of rApp instruction in SMO of O-RAN.

1 radio access network control apparatus, 11 O1/O2 information acquisition unit, 12 O1/O2 information provision unit, 13 operational policy generation unit, 14 configuration change instruction generation unit, 15 instruction verification unit, 16 instruction issuance unit.

## Claims

1. A radio access network control apparatus comprising at least one processor that performs:
by an instruction verification unit provided in the SMO (Service Management and Orchestration) of the O-RAN, verifying instruction to the outside of the SMO generated by the rApp executed by the Non-RT RIC (Non-Real Time RAN Intelligent Controller) in the SMO; and
by an instruction issuance unit provided in the SMO, issuing the verified instruction to the outside of the SMO.

2. The radio access network control apparatus according to claim 1, wherein
the instruction verification unit verifies an operational policy generated by the rApp concerning the operation of a radio access network node, and
the instruction issuance unit issues the verified operational policy to at least one of the radio access network node, a virtual infrastructure that virtually manages the radio access network node, and the Near-RT RIC (Near-Real Time RAN Intelligent Controller).

3. The radio access network control apparatus according to claim 1, wherein
the instruction verification unit verifies a configuration change instruction generated by the rApp concerning the configuration change outside the SMO, and
the instruction issuance unit issues the verified configuration change instruction to at least one of a radio access network node, a virtual infrastructure that virtually manages the radio access network node, and the Near-RT RIC (Near-Real Time RAN Intelligent Controller).

4. The radio access network control apparatus according to claim 2, wherein
the instruction verification unit verifies, together with the operational policy, a configuration change instruction generated by the rApp concerning the configuration change outside the SMO, and
the instruction issuance unit issues at least one of the verified operational policy and the verified configuration change instruction to at least one of the radio access network node, the virtual infrastructure, and the Near-RT RIC.

5. The radio access network control apparatus according to claim 1, wherein the instruction verification unit applies at least one of the following processes to the instruction generated by the rApp: prioritization, issuance scheduling, cancellation, and modification.

6. The radio access network control apparatus according to claim 1, wherein at least a portion of the instruction verification unit is provided in the Non-RT RIC.

7. The radio access network control apparatus according to claim 6, wherein at least a portion of the instruction verification unit is provided to the R1 interface, which is the interface with the rApp.

8. The radio access network control apparatus according to claim 1, wherein at least a portion of the instruction issuance unit is provided to at least one of the A1 interface, the O1 interface, and the O2 interface, which are the interfaces with the outside of the SMO.

9. The radio access network control apparatus according to claim 1, wherein
the at least one processor performs:
by a virtual infrastructure information acquisition unit, acquiring virtual infrastructure information from a virtual infrastructure that virtually manages a radio access network node; and
by a virtual infrastructure information provision unit, providing the virtual infrastructure information to the rApp through the R1 interface, which is the interface with the rApp; and wherein
the instruction verification unit verifies the instruction generated by the rApp based on the virtual infrastructure information.

10. The radio access network control apparatus according to claim 1, wherein
the at least one processor performs:
by an operational state acquisition unit, acquiring operational state of a radio access network node from a virtual infrastructure that virtually manages the radio access network node;
by an operational data acquisition unit, acquiring measured operational data from the radio access network node; and
by the rApp-based operational policy generation unit, generating an operational policy concerning the operation of the radio access network node based on the operational state and the operational data; and wherein
the instruction verification unit verifies the operational policy.

11. A radio access network control method comprising:
in the SMO (Service Management and Orchestration) of the O-RAN, verifying instruction to the outside of the SMO generated by the rApp executed by the Non-RT RIC (Non-Real Time RAN Intelligent Controller) in the SMO; and
in the SMO, issuing the verified instruction to the outside of the SMO.

12. A computer-readable medium storing a radio access network control program causing a computer to perform:
in the SMO (Service Management and Orchestration) of the O-RAN, verifying instruction to the outside of the SMO generated by the rApp executed by the Non-RT RIC (Non-Real Time RAN Intelligent Controller) in the SMO; and
in the SMO, issuing the verified instruction to the outside of the SMO.
